# EUROPEAN PATENT SPECIFICATION

(11) **EP 2 680 642 B1**
(45) Date of publication and mention of the grant of the patent: **11.09.2019**
(21) Application number: 12760953.5
(22) Date of filing: 11.01.2012
(51) Int. Cl.: H04W 52/02, H04W 76/18, H04W 36/14

(54) **COMMUNICATION METHOD, NETWORK EQUIPMENT AND COMMUNICATION SYSTEM FOR MULTIMODAL NETWORK**
KOMMUNIKATIONSVERFAHREN, NETZWERKVORRICHTUNG UND KOMMUNIKATIONSSYSTEM FÜR MULTIMODALE NETZWERKE
PROCÉDÉ DE COMMUNICATION, ÉQUIPEMENT RÉSEAU ET SYSTÈME DE COMMUNICATION POUR UN RÉSEAU MULTIMÉDIA

(30) Priority: 22.03.2011 CN 201110069184
(43) Date of publication of application: 01.01.2014
(73) Proprietor: Huawei Technologies Co., Ltd., Longgang District Shenzhen, Guangdong 518129 (CN)
(72) Inventor: ZHAO, Yang, Shenzhen Guangdong 518129 (CN); WANG, Jiyong, Shenzhen Guangdong 518129 (CN)
(74) Representative: Goddar, Heinz J.
(86) International application number: PCT/CN2012/070222
(87) International publication number: WO 2012/126284

(56) References cited:
- EP-A1- 2 117 279
- WO-A2-2011/014730
- CN-A- 1 770 920
- CN-A- 101 207 900
- US-A1- 2008 045 262
- US-A1- 2010 234 013
- ANONYMOUS: "Method to increase power efficiency in a mixed GSM/UMTS network", RESEARCH DISCLOSURE, MASON PUBLICATIONS, HAMPSHIRE, GB, vol. 471, no. 88, 1 July 2003 (2003-07-01) , XP007133045, ISSN: 0374-4353

## Description

### TECHNICAL FIELD

The present invention relates to the field of communication technologies, and in particular, to a communication method, a network device, and a communication system for a multi-RAT network.

### BACKGROUND

In order to reduce operation cost and protect environment, many energy saving measures will be applied to communication networks. Especially in a situation where networks of different RAT (radio access technology) coexist, how to utilize different networks to provide services in a more economic way is a hotspot widely discussed in the industry.

Currently, overlapping coverage seen in a plurality of networks of different RAT is usually handled by deactivating a network thereof given that a certain condition is met, thereby reducing the entire energy consumption of the current communication network to achieve energy saving. An example that overlapping coverage occurs between an LTE (Long Term Evolution) network and a GSM (Global System of Mobile communication, Global System of Mobile communication)/UMTS (Universal Mobile Telecommunications System, Universal Mobile Telecommunications System) network is taken, where the system may, during low traffic hours at night, deactivate all channels of LTE cells, namely, deactivate all service channels and common broadcast control channels, and only retain channels of the GSM network or UMTS network.

However, during the implementation of the foregoing process of implementing network energy saving by deactivating a network of a certain format, the inventor finds that the prior art at least has the following problems:
Although the foregoing solution of deactivating a network of a certain RAT has some effects in the aspect of energy saving in communication networks, the GSM/UMTS network fails to bear high-rate data services; therefore, after the LTE network is deactivated, a high-rate data service, if initiated by a terminal, will fail to be set up because the GSM network fails to bear the high-rate data service, finally degrading user experience.

Besides, US application 2012/234013 A1 discloses a method of operating a mobile radio network which has two or more supply layers, where the supply layers are superimposed and are each formed by a plurality of transmitting stations. US application 2008/045262 A1 discloses a method and apparatus for providing service-based cell reselection.

EP 2 117 279 A1 discloses a method and device for providing system information of a first network via a system information of a second network. A method may include providing system information of a future radio system via a current radio system, e.g. inter-system broadcast communication control channel of the future radio system to mobile terminals associated with the future radio system, and partially switching off the radio future system. The user terminal may launch a service request towards the future radio system that cannot be supplied by the current radio system. Hence, the future radio system may be switched on again.

### SUMMARY

Embodiments of the present invention provide a communication method, a network device, and a communication system for a multi-RAT network, which are used to implement network energy saving while ensuring normal running of communication services.

The embodiments of the present invention, to achieve the foregoing purpose, adopt the technical solutions according to claims 1-15.

In the communication method, the network device, and the communication system for a multi-RAT network provided in the embodiments of the present invention, a network of a certain RAT in the overlapping coverage area of the multi-RAT network is selected as the basic network, and all or part of common broadcast control channels corresponding to other non-basic networks are deactivated, thereby reducing communication traffic of the non-basic network and further reducing power consumption of the non-basic network for network energy saving purpose; meanwhile in the embodiments of the present invention, since the service channel of the non-basic network is not changed accordingly, the communication system, when the terminal needs to initiate a high-rate data service, can utilize the service channel of the non-basic network to bear the high-rate data service, thereby avoiding the problem of failure of service setup. Therefore, the communication method, the network device, and the communication system provided in the embodiments of the present invention can implement network energy saving while ensuring normal running of communication services.

### BRIEF DESCRIPTION OF DRAWINGS

FIG. 1 is a block flowchart of a communication method for a multi-RAT network in Embodiment 1 of the present invention;
FIG. 2 is a schematic structural diagram of a network device in Embodiment 1 of the present invention;
FIG. 3 is a block flowchart of a communication method for a multi-RAT network in Embodiment 2 of the present invention;
FIG. 4 is a block flowchart of a communication method for a multi-RAT network in Embodiment 3 of the present invention;
FIG. 5 is a signaling flowchart 1 of step-by-step deactivating multi-RAT cells in an embodiment of the present invention;
FIG. 6 is a signaling flowchart 2 of step-by-step deactivating multi-RAT cells in an embodiment of the present invention;
FIG. 7 is a schematic structural diagram of a network device in Embodiment 4 of the present invention;
FIG. 8 is a schematic structural diagram 1 of an adjusting unit in FIG. 7;
FIG. 9 is a schematic structural diagram 2 of the adjusting unit in FIG. 7;
FIG. 10 is a schematic structural diagram 3 of the adjusting unit in FIG. 7; and
FIG. 11 is a schematic structural diagram of a communication system in an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The communication method for a multi-RAT network provided in the embodiments of the present invention may be applicable to, but not limited to, the multi-RAT network composed of any two or three of GSM, UMTS, and LTE networks.

### Embodiment 1

A communication method for a multi-RAT network is provided in an embodiment of the present invention, where a network of the multi-RAT network serves as a basic network; the implementation manner of selecting a network from the multi-RAT network as the basic network may be that, a network side, according to information such as a policy of an operator and/or terminal supported radio access technology capability, selects a network of a certain RAT from the multi-RAT network as the basic network.

Both the embodiment and the following embodiments select the GSM network as a basic network and the UMTS and/or LTE network as a non-basic network to further introduce the solutions provided in the embodiments of the present invention. The non-basic network refers to other networks except the basic network in an overlapping coverage area of the multi-RAT network.

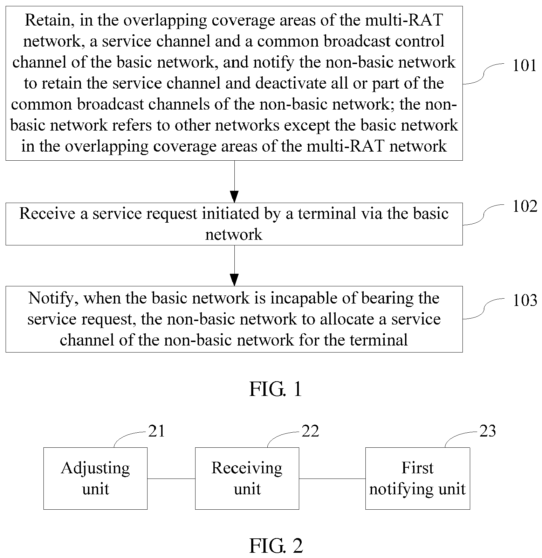

As shown in FIG. 1, the communication method includes the following steps:
101: Retain, in the overlapping coverage area of the multi-RAT network, a service channel and a common broadcast control channel of the basic network, and notify the non-basic network to retain the service channel and deactivate all or part of the common broadcast control channels of the non-basic network, where the non-basic network refers to other networks except the basic network in the overlapping coverage area of the multi-RAT network.

On the network side, the common broadcast control channel (such as a broadcast control channel BCCH) of a GSM cell is activated. The channel of the GSM cell is retained when the network system has a UMTS and/or an LTE cell in overlapping coverage with the GSM cell; all or part of the common broadcast control channels of the UMTS and/or LTE cell are deactivated, and meanwhile the service channel of the UMTS and/or LTE cell is retained.

102: Receive a service request initiated by a terminal via the basic network.

103: Notify, when the basic network is incapable of bearing the service request, the non-basic network to allocate a service channel of the non-basic network for the terminal.

The execution subject of the foregoing steps may be an access network node of the basic network, such as a base station subsystem BSS (a base station controller BSC + a base transceiver station BTS) in the GSM network, or a radio network subsystem RNS (a radio network controller RNC + a base station NodeB) in the UMTS network, or an evolved base station eNodeB in the LTE network.

Correspondingly, the embodiment further provides a network device, which can implement the foregoing method; as shown in FIG. 2, a network in the overlapping coverage area of the multi-RAT network serves as the basic network, the network device including:
an adjusting unit 21, configured to retain, in the overlapping coverage area of the multi-RAT network, a service channel and a common broadcast control channel of the basic network, and notify a non-basic network to deactivate all or part of the common broadcast control channels of the non-basic network, where the non-basic network refers to other networks except the basic network in the overlapping coverage area of the multi-RAT network;
a receiving unit 22, configured to receive a service request initiated by a terminal via the basic network; and
a first notifying unit 23, configured to notify, when the basic network is incapable of bearing the service request sent from the terminal, the non-basic network to allocate a service channel of the non-basic network for the terminal.

In addition, the embodiment of the present invention further provides a communication system, where in the communication system, a network in the overlapping coverage area of the multi-RAT network serves as the basic network, and other networks except the basic network serve as the non-basic networks.

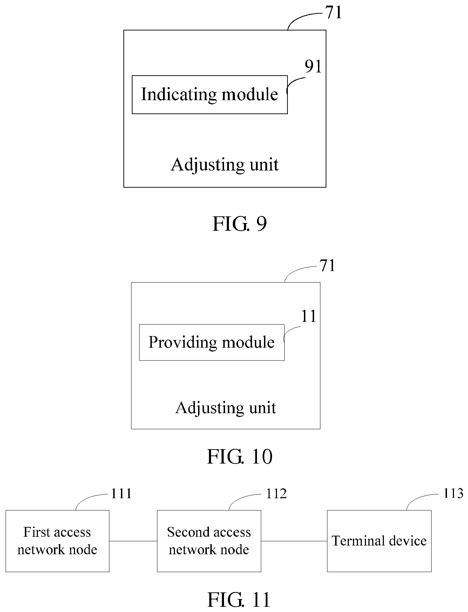

As shown in FIG. 11, the communication system includes: a first access network node 111 located on the basic network, a second access network node 112 located on the non-basic network, and a terminal device 113, where,
the first access network node 111 is configured to retain, in the overlapping coverage area of the multi-RAT network, a service channel and a common broadcast control channel of the current basic network, and notify the second access network node 112 to deactivate all or part of the common broadcast control channels of the non-basic network; and
the first access network node 111 is further configured to receive from the terminal device 113 a service request sent via the current basic network, and notify, when the current basic network is incapable of bearing the service request, the second access network node 112 to allocate a service channel of the non-basic network for the terminal.

In the communication method, the network device, and the communication system for a multi-RAT network provided in the embodiments of the present invention, a network of a certain RAT in the overlapping coverage area of the multi-RAT network is selected as the basic network, and all or part of common broadcast control channels corresponding to other non-basic networks are deactivated, thereby reducing communication traffic of the non-basic network and further reducing power consumption of the non-basic network for network energy saving purpose; meanwhile in the embodiment of the present invention, since the service channel of the non-basic network is not changed accordingly, the communication system, when the terminal needs to initiate a high-rate data service, can utilize the service channel of the non-basic network to bear the high-rate data service, thereby avoiding the problem of failure of service setup.

### Embodiment 2

The following uses a specific instance to further introduce the communication method provided in the embodiments of the present invention. In the embodiment, a multi-RAT network may be the multi-RAT network at least including a GSM network, a UMTS network, and/or an LTE network.

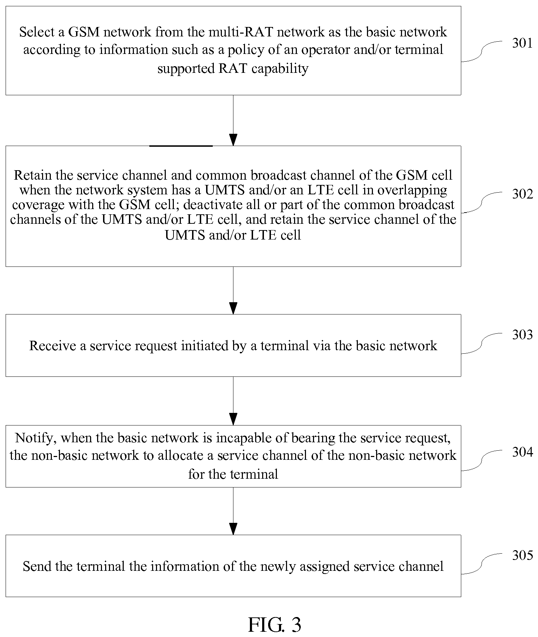

As shown in FIG. 3, the communication method for a multi-RAT network provided in the embodiment of the present invention specifically includes the following steps:
301: Select the GSM network from the multi-RAT network as the basic network according to information such as a policy of an operator and/or terminal supported radio access technology capability.
302: Retain a service channel and a common broadcast control channel of the GSM cell when the network system has a UMTS and/or an LTE cell in overlapping coverage with the GSM cell; deactivate all or part of the common broadcast control channels of the UMTS and/or LTE cell, and retain the service channel of the UMTS and/or LTE cell.

In the embodiment, the specific implementation manner of deactivating all or part of the common broadcast control channels corresponding to the non-basic network may be that: deactivating all or part of the common broadcast control channels corresponding to the non-basic network according to a state of a terminal in connected mode in the cell of the non-basic network; and
then delivering, if the common broadcast control channels corresponding to the non-basic network are part deactivated, a broadcast system information block via an activated common broadcast control channels of the non-basic network at a preset scheduling time point;
or delivering, if the common broadcast control channels corresponding to the non-basic network are all deactivated, a broadcast system information block or a parameter included in the broadcast system information block via a dedicated signaling.

An example where the UMTS network serves as the non-basic network is taken, in step 1, if a UTRAN (UMTS Terrestrial Radio Access Network, UMTS Terrestrial Radio Access Network) cell bears no service, a synchronization channel (including P-SCH primary synchronization channel and S-SCH secondary synchronization channel), a CPICH (Common Pilot Channel), and a common broadcast control channels (Broadcast Control Channel) borne by a physical channel P-CCPCH (Primary Common Control Physical Channel) thereof all send information according to a set power. Generally, these common broadcast control channels occupy a large part, such as 30%, of transmit power of a cell. The total transmit power of a cell is preset, and only the power, that excludes the power occupied by these common broadcast control channels, can be used for the data and/or control channels to run services. If such broadcast channels can be part deactivated, the saved power can be used for data and/or control channels required by services, thereby improving capacity, coverage, and/or throughput of a cell.

In a URTAN cell, a terminal in RRC (Radio Resource Control, radio resource control) connected mode, when running services in Cell-FACH state, needs to read a broadcast system information block SIB (System Information Block) on the common broadcast control channel. Actually, only an SIB of part of the common broadcast control channels is required in Cell_FACH state. Broadcast information on the common broadcast control channel is guided by scheduling information included in a master information block MIB (Master Information Block) thereof, namely, broadcast time points of other SIBs are obtained once the MIB is read. Terminals in Cell_DCH state do not need to read the broadcast system information block of the common broadcast control channel.

Specifically, the UTRAN cell determines the state of the terminal in RRC connected mode in a cell, and sets, if only the Cell_FACH state is present or both the Cell_FACH and Cell_DCH states are present, SIB scheduling information required in the Cell_FACH state is set in the MIB; sends these SIBs at these SIB scheduling time points, and stops sending at other SIB scheduling time points. The terminal in Cell-FACH state, according to the MIB broadcast on the common broadcast control channel, starts to read required SIBs at corresponding SIB broadcast time points.

The UTRAN cell determines the state of the terminal in RRC connected mode in a cell, and deactivates all of the common broadcast control channels if only the Cell_DCH state is present, and optionally, may further deactivate the pilot channel CIPCH to directly refuse the terminal to camp on or accept other services.

In a UTRAN cell where the state of a terminal switches over from Cell_DCH to Cell_FACH, the network side may, according to foregoing method, activate part of the common broadcast control channels to send the MIB, and SIBs required in the Cell_FACH state, and stop the sending of other SIBs. In addition, the following method may be further adopted:
When the UTRAN network commands a terminal to switch over from the Cell_DCH state to the Cell_FACH state, the channel switchover command, such as RADIO BEARER RECONFIGURATION (radio bearer configuration), carries SIBs required in the Cell_FACH state or only includes parameters included in SIBs and required in the Cell_FACH state.

Correspondingly, a terminal in Cell_DCH state, according to information such as the SIBs required in the Cell-FACH state or parameters in the SIBs required in the Cell-FACH state that are included in the RADIO BEARER RECONFIGURATION command, switches over to the Cell_FACH state upon receiving of the RADIO BEARER RECONFIGURATION command, and runs services in Cell_FACH state according to the parameters required for the Cell_FACH state provided in the RADIO BEARER RECONFIGURATION.

Similarly, the common broadcast control channel of an LTE cell may also be selectively deactivated by using the foregoing method.
303: Receive a service request initiated by a terminal via the basic network.
304: Notify, when the basic network is incapable of bearing the service request, the non-basic network to allocate a service channel of the non-basic network for the terminal.
305: Send the terminal information of the newly allocated service channel.

In the embodiment, optionally, part of the service channels corresponding to the non-basic network are deactivated when cell load is lower than a preset threshold in the non-basic network (such as the UMTS and/or LTE network); specifically, at least one service channel may be retained for bearing the service request that the GSM network fails to bear.

In the communication method for a multi-RAT network provided in the embodiment of the present invention, a network of a certain RAT in the overlapping coverage area of the multi-RAT network is selected as the basic network, and all or part of the common broadcast control channels corresponding to other non-basic networks are deactivated with only the common broadcast control channel of the basic network retained. In this way, all or part of the common broadcast control channels corresponding to the non-basic network are deactivated, thereby reducing communication traffic of the non-basic network and further reducing power consumption of the non-basic network for network energy saving purpose; meanwhile in the embodiment of the present invention, since the service channel of the non-basic network is not changed accordingly, the communication system, when the terminal needs to initiate a high-rate data service, can utilize the service channel of the non-basic network to bear the high-rate data service, thereby avoiding the problem of failure of service setup.

### Embodiment 3

The following uses another specific instance to further introduce the communication method provided in the embodiments of the present invention. In the embodiment, a multi-RAT network may be the multi-RAT network at least including a GSM network, a UMTS network, and/or an LTE network.

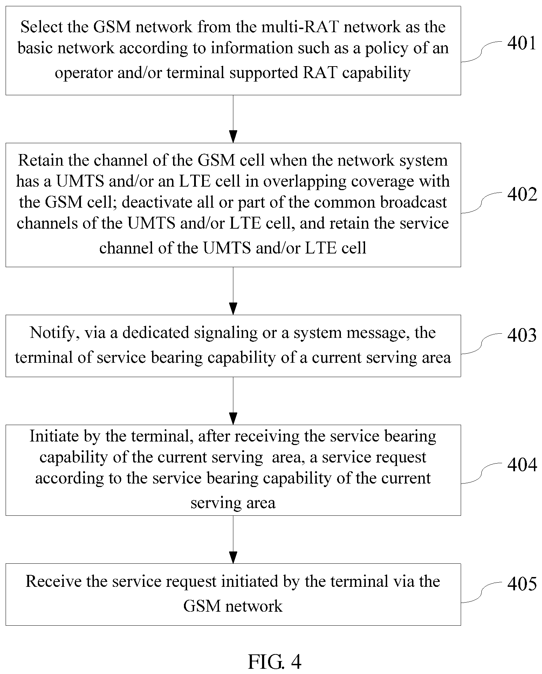

As shown in FIG. 4, the communication method for a multi-RAT network provided in the embodiment of the present invention specifically includes the following steps:
401: Select the GSM network from the multi-RAT network as the basic network according to information such as a policy of an operator and/or terminal supported radio access technology capability.
402: Retain a channel of the GSM cell when the network system has a UMTS and/or an LTE cell in overlapping coverage with the GSM cell; deactivate all or part of the common broadcast control channels of the UMTS and/or LTE cell, and meanwhile retain the service channel of the UMTS and/or LTE cell.
403: Notify, via a dedicated signaling or a system message, the terminal of service bearing capability of a current serving area.

In this step, the current serving area may be the geographical area of a cell that a terminal currently camps on; the current serving area has overlapping coverage of the basic network and a non-basic network.

The service bearing capability of the serving area includes: a service type supported by the serving area and/or a service bandwidth supported by the serving area. The service bearing capability of the serving area is not limited to the service bearing capability of the basic network, and may further includes the service bearing capability of the current non-basic network.

For example, the BBS (Base Station Subsystem, base station subsystem) of the GSM network may have the following content added to an SI2Quater broadcast message or a Measurement Information dedicated message:

| |
|---|
| Additional supported services (2 bits) |
| 0 0 only support GSM services |
| 0 1 support GSM and UMTS services |
| 1 0 support GSM and LTE services |
| 1 1 support GSM, UMTS and LTE services |

or directly indicate bandwidth requirements of supported services:

| |
|---|
| Additional supported services (3 bits) |
| 0 0 0 up to 1000 octets/s |
| 0 0 1 up to 2000 octets/s |
| ... |

Specifically, the network side, via a dedicated signaling or a system message, indicates the terminal that a service channel supporting a high-level service is present in the serving area of the current GSM cell, and prompts the terminal to initiate the high-level service that the GSM network originally fails to support. The high-level service refers to a service, requiring a higher bandwidth, speed, and high QoS requirements that the GSM network cannot bear, and only the UMTS and/or LTE network can bear.

Since the current communication system only activates the common broadcast control channel of the GSM, the LTE or UMTS cell is invisible to the terminal; in this case, a user may initiate a high-level service, but the terminal will shield it in application layer in advance. Therefore, the system message of the GSM may broadcast whether the current cell of the terminal supports the high-level service, or LTE and/or UMTS services. The terminal, after receiving this message, determines whether to initiate a high-level service.

The network side, after the network instructs the terminal to set up a connection in two-step access way, may also notify the terminal via a dedicated signaling after the terminal initiates a service.

404: The terminal initiates, after receiving the service bearing capability of the current serving area, a service request according to the service bearing capability of the current serving area.

For example, in the GSM network the terminal may initiate a high-level service request, if that the current serving area may bear a high-level service is obtained according to the service bearing capability of the current serving area.

405: Receive from the terminal the service request sent via the GSM network.

The terminal, for camping on the GSM network, will initiate a service request via the GSM network; if the terminal initiates a high-level service exceeding the bearing capability of the GSM network, the GSM network will notify the UMTS and/or LTE network to bear the high-level service.

In the embodiment, optionally, part of the service channels corresponding to the non-basic network, are deactivated when cell load is lower than a first preset threshold in the non-basic network (such as the UMTS and/or LTE network); specifically, at least one service channel may be retained for bearing the service request that the GSM network fails to bear.

In the communication method for a multi-RAT network provided in the embodiment of the present invention, a network of a certain RAT in the overlapping coverage area of the multi-RAT network is selected as the basic network, and the common broadcast control channels corresponding to other non-basic networks are all or part deactivated with only the common broadcast control channel of the basic network retained. In this way, all or part of the common broadcast control channels corresponding to the non-basic network are deactivated, thereby reducing communication traffic of the non-basic network and further reducing power consumption of the non-basic network for network energy saving purpose; meanwhile in the embodiment of the present invention, since the service channel of the non-basic network is not changed accordingly, the communication system, when the terminal needs to initiate a high-rate data service, can utilize the service channel of the non-basic network to bear the high-rate data service, thereby avoiding the problem of failure of service setup.

Certainly, the technical solutions provided in Embodiment 1 and Embodiment 2 may also be combined. For example, the network side, via a dedicated signaling or a system message, notifies the terminal of the service bearing capability of the current serving area, and the terminal, after obtaining the service bearing capability of the GSM network, initiates a corresponding service request. If the service request cannot be borne by the GSM network, the technical solutions provided in Embodiment 3 is used to notify the UMTS and/or LTE network to allocate a service channel for the terminal.

Furthermore, during implementation of the foregoing step 302 and/or step 402, the network side, apart from all or part deactivating the common broadcast control channels, may also consider deactivating the multi-RAT cells step by step. Specifically, the network side may notify, when the cell load of the non-basic network is lower than the first preset threshold, the non-basic network to deactivate part of the service channels; notify, when the cell load of the non-basic network is lower than a second preset threshold, the non-basic network to deactivate the cell. The first preset threshold is higher than the second preset threshold.

For example, when the GSM network and UMTS network coexist, the GSM network may notify, if the current load is high, the UMTS cell to deactivate all or part of the common broadcast control channels; notify, if the current load is lower than the first preset threshold and no high-rate data service is present, the UMTS cell to deactivate part of the service channels; or notify, if the cell load is lower than the second preset threshold and no high-rate data service is present, the UMTS cell to deactivate the cell. Meanwhile, the UMTS cell may also automatically deactivate, when the cell has services or high load, all or part of the common broadcast control channels, and deactivate, when the cell has no service, the cell.

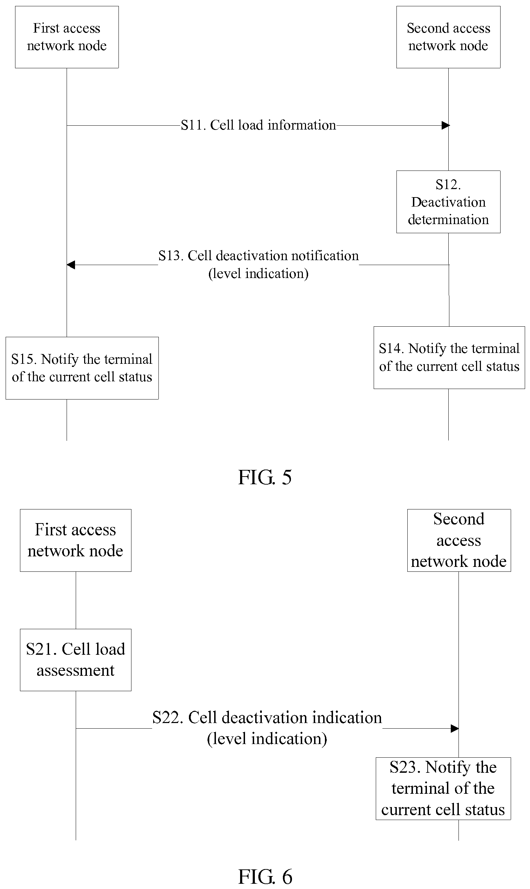

In the embodiment, an access network control node of the basic network is called a first access network node, and an access network control node of the non-basic network is called a second access network node. As shown in FIG. 5, the specific procedure of step-by-step deactivating multi-RAT cells is approximately as follows:
S11: The second access network node obtains from the first access network node the cell load information of the basic network.

Specifically, the implementation process of step S11 may be that the second access network node, before taking an energy saving measure for a cell to which the second access network node belongs, queries the first access network node of a neighboring cell for the load information of the first access network, and receives a query result provided by the first access network node.

Or the implementation process of step S11 is that the first access network node actively reports its cell load information to the second access network node of the neighboring cell.

S12: The second access network node determines, according to the cell load information, to deactivate all or part of the common broadcast control channels of the current non-basic network.

Furthermore, the second access network node, obtaining from the cell load information that the load of the non-basic network is extremely low, may further determine, according to the cell load information, whether to deactivate part of the service channels, or the cell.

The second access network node may determine, according to a certain algorithm such as cell load information, whether to deactivate the cell, and determine to deactivate all or part of the common broadcast control channels of the current non-basic network given that the cell does not need to be deactivated. Therefore, the second access network node, for having obtained the load information of the basic network, needs to consider, when determining a deactivating granularity, both the load situation of the cell and the load information of a cell adjacent to the first access network node.

For example, in an LTE cell, when an eNodeB finds that a certain cell has a high load or a neighboring GSM cell has a high load, the network side may choose to only deactivate the common broadcast control channel instead of the whole cell, and share the load by retaining the service channel. Or, when the eNodeB finds that running services of a certain cell includes a service that the GSM network fails to bear or a high-rate service, the network side still retains this service channel but deactivate the common broadcast control channel thereof and/or other service channels.

The determination following a certain algorithm may be, but not limited to, determination performed according to information such as the cell load and/or service. The present invention does not limit the algorithm that the network side uses for determination.

S13: The second access network side sends the information of deactivating all or part of the common broadcast control channels to the first access network node.

In the embodiment, the second access network node may send, via a cell deactivation notification message, the information of deactivating all or part of the common broadcast control channels to the first access network node. The information at least includes level indication of the current cell deactivation:

| |
|---|
| Cell deactivation level notification |
| 0 0 0 0 the whole cell is active/activated |
| 0 0 0 1 all traffic channels are deactivated |
| 0 0 10 BCCH channels are deactivated |
| ... |
| 0 10 0 the whole cell is deactivated |
| ... |

For the option, part of BCCH channels are deactivated, it may further specifically indicate that which channel is deactivated, so as to enable the first access network node to give a correct indication to the terminal:

| |
|---|
| BCCH deactivation indication |
| 0 0 0 0 all BCCH channels are deactivated |
| 0 0 0 1 only CPICH is activated |
| 0 0 10 only SCH and CPICH are activated |
| ... |

S14: The second access network node notifies, via a dedicated signaling, the terminal that is running services in this cell of the deactivating state of the current cell.

The content structure of the message, delivered by the second access network node to the terminal, is similar to the structure of the foregoing cell deactivation notification message. The terminal, after receiving the message, may choose to perform cell reselection/selection; or perform measurement in time, and the network side, according to a measure result of the terminal, switches or redirects it to a neighboring GSM cell.

S15: The first access network node determines, after receiving the information sent from the second access network node in step S13, whether to notify the terminal according to the information.

For example, when a neighboring LTE cell deactivates the common broadcast control channel, the BSC may deliver, in a system message, the information of service bearing capability described in Embodiment 3 to the terminal. If the neighboring LTE cell is completely deactivated, the BSC may delete the LTE cell originally in a neighboring cell list from the system message, or minimize the priority thereof, thereby avoiding terminal measurement and reselection.

The execution sequence of the foregoing steps is not limited by the step numbers; for example, steps S14 and S15 may take place concurrently.

In addition to the process illustrated in FIG. 5, the specific procedure of step-by-step deactivating multi-RAT cells may further be completed by the manner illustrated in FIG. 6:
S21: The first access network node assesses the cell load, determines, according to the cell load information, all or part of the common broadcast control channels of the non-basic network that needs to be deactivated, and constructs a deactivation indication for instructing the non-basic network to deactivate all or part of the common broadcast control channels of the non-basic network.
S22: The first access network node sends the cell deactivation indication to the second access network node, so as to instruct the non-basic network to deactivate all or part of the common broadcast control channels.
   The cell deactivation indication carries the level indication of cell deactivation, and may further carry the level indication of channel deactivation. For the specific manner of the cell deactivation indication carrying the foregoing level indication, refer to the message structure in step S13.
S23: The second access network node deactivates, according to the cell deactivation indication, the corresponding common broadcast control channel, and notifies, via a dedicated signaling, the terminal that is running services on this cell of the status of the current cell deactivation.

According to the procedure of FIG. 6, the work of determining to deactivate all or part of the common broadcast control channels of the current non-basic network is shifted to the first access network node. The first access network node collects the load situation of the current cell; deactivates, when the load is lower than the first preset threshold, via the second access network node, part of the service channels; or directly instructs, when the load is lower than the second preset threshold, the second access network node to deactivate the cell. The first preset threshold is higher than the second preset threshold.

The first access network node and the second access network node may be, but not limited to, BBS or RNS or eNodeB, and only an example is illustrated in the embodiment.

The interaction between the foregoing access network nodes may be directly via an interface (such as an Iur-g interface between RNC and BSC) between access network nodes, or an RIM process (RAN Information Management, wireless access network information management) or an OSS (Operation Supporting System, operation supporting system) node.

Both the processes illustrated in FIG. 5 and FIG. 6 may be repeatedly performed during a period of time, and as long as the trigger condition changes, the full process illustrated in FIG. 5 or FIG. 6 may be performed hereby. For example, an eNodeB may retain, when finding that a certain cell has a high load or a neighboring cell has a high load, the service channel of the cell and deactivate the common broadcast control channels to share the load; when the load lowers down, the second access network node may choose to deactivate, on the basis of deactivating the common broadcast control channel, the service channel, thereby deactivating the whole cell to achieve energy saving; and re-activate, when the load re-rises over the preset threshold, the whole cell.

### Embodiment 4

Corresponding to the foregoing Embodiment 2 and Embodiment 3, an embodiment of the present invention further provides a network device for implementing the foregoing method.

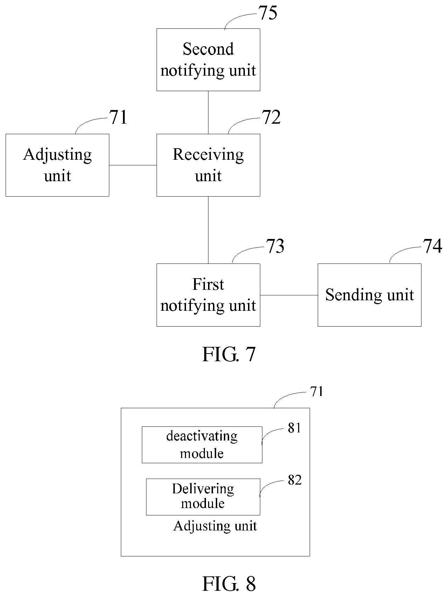

As shown in FIG. 7, the network device is provided in the embodiment, where a network in the overlapping areas of a multi-RAT network serves as the basic network; specifically, the network device includes: an adjusting unit 71, a receiving unit 72, and a first notifying unit, where,
the adjusting unit 71 is configured to retain, in the overlapping coverage area of the multi-RAT network, a service channel and a common broadcast control channel of the basic network, and notify a non-basic network to deactivate all or part of the common broadcast control channels of the non-basic network, where the non-basic network refers to other networks except the basic network in the overlapping coverage area of the multi-RAT network;
the receiving unit 72, configured to receive a service request initiated by a terminal via the basic network; and
the first notifying unit 73, configured to notify, when the basic network is incapable of bearing the service request sent from the terminal, the non-basic network to allocate a service channel of the non-basic network for the terminal.

In addition, the foregoing network device may further include:
a sending unit 74, configured to send the terminal the information of the newly allocated service channel; and
a second notifying unit 75, configured to notify, via a dedicated signaling or a system message, the terminal of service bearing capability of a current serving area.

As shown in FIG. 8, the adjusting unit 71 of the foregoing network device may include:
a deactivating module 81, configured to notify, according to a state of a terminal in connected mode in a cell, the non-basic network to deactivate all or part of the common broadcast control channels of the non-basic network.

Further, the adjusting unit 71 further includes a delivering module 82, where
the delivering module 82 is configured to deliver, if the common broadcast control channels corresponding to the non-basic network are part deactivated, a broadcast system information block via an activated common broadcast control channel of the non-basic network at a preset scheduling time point; or
the delivering module 82 is configured to deliver, if the common broadcast control channels corresponding to the non-basic network are all deactivated, a broadcast system information block or a parameter included in the broadcast system information block via a dedicated signaling.

As shown in FIG. 9, the adjusting unit 71 of the foregoing network device may include:
an indicating module 91, configured to send a cell deactivation indication to the non-basic network, so as to instruct the non-basic network to deactivate all or part of the common broadcast control channels of the non-basic network.

As shown in FIG. 10, the adjusting unit 71 of the foregoing network device may include:
a providing module 11, configured to provide cell load information of the current basic network for the non-basic network, so as to enable the non-basic network, according to the cell load information, to deactivate all or part of the common broadcast control channels of the non-basic network.

Further in the embodiment, the adjusting unit 71 is further configured to deactivate, when the cell load of the non-basic network is lower than a first preset threshold, part of the service channels corresponding to the non-basic network; or
the adjusting unit 71 is further configured to notify, when the cell load of the non-basic network is lower than a second preset threshold, the non-basic network to deactivate the cell.

The first preset threshold is higher than the second preset threshold.

For the procedure of utilizing the network device provided in the embodiment to complete the communication method for a multi-RAT network, reference may be made to the descriptions of Embodiment 2 and Embodiment 3, which is not described here again.

The network device provided in the embodiment of the present invention, selects a network of a certain RAT in the overlapping coverage area of the multi-RAT network as the basic network, and deactivates all or part of common broadcast control channels corresponding to other non-basic networks, thereby reducing communication traffic of the non-basic network and further reducing power consumption of the non-basic network for network energy saving purpose; meanwhile in the embodiment of the present invention, since the service channel of the non-basic network is not changed accordingly, the communication system, when the terminal needs to initiate a high-rate data service, can utilize the service channel of the non-basic network to bear the high-rate data service, thereby avoiding the problem of failure of service setup.

### Embodiment 5

An embodiment of the present invention further provides a communication system, where a network in an overlapping coverage area of the multi-RAT network serves as a basic network, and other networks except the basic network serve as non-basic networks.

In combination with FIG. 11, the communication system includes: a first access network node 111 located on the basic network, a second access network node 112 located on the non-basic network, and a terminal device 113, where,
the first access network node 111 is configured to retain, in the overlapping coverage area of the multi-RAT network, a service channel and a common broadcast control channel of the current basic network, and notify the second access network node 112 to deactivate all or part of the common broadcast control channels of the non-basic network; and
the first access network node 111 is further configured to receive from the terminal device 113 a service request sent via the current basic network, and notify, when the current basic network is incapable of bearing the service request, the second access network node 112 to allocate a service channel of the non-basic network for the terminal.

Furthermore, in the embodiment, the first access network node 111 notifies the second access network node 112 to deactivate all or part of the common broadcast control channels of the non-basic network, specifically,
according to a state of a terminal in connected mode in a cell, the first access network node 111 notifies the second access network node 112 to deactivate all or part of the common broadcast control channels of the non-basic network;
   or,
the first access network node 111 notifies the second access network node 112 to deactivate all or part of the common broadcast control channels of the non-basic network, specifically,
the first access network node 111, according to cell load information, determines all or part of the common broadcast control channels of the current non-basic network that needs to be deactivated, and constructs a deactivation indication for instructing the non-basic network to deactivate all or part of the common broadcast control channels;
and the first access network node 111 sends the deactivation indication to the second access network node 112, so as to instruct the non-basic network to deactivate all or part of the common broadcast control channels of the non-basic network.

In the embodiment, the second access network node 112 is further configured to determine, according to the cell load information, to deactivate all or part of the common broadcast control channels of the current non-basic network, and send the information of deactivating all or part of the common broadcast control channels of the non-basic network to the first access network node.
Furthermore, the second access network node 112 is further configured to notify, via a dedicated signaling, the terminal device 113 that is running services in the cell of the status of the cell deactivation; or
the first access network node 111 is further configured to determine, according to the received information that is sent from the second access network node 112 about deactivating all or part of the common broadcast control channels of the non-basic network, whether to notify the terminal device 113.

In the communication system provided in the embodiment of the present invention, a network of a certain RAT in the overlapping coverage area of the multi-RAT network is selected as the basic network, and all or part of common broadcast control channels corresponding to other non-basic networks are deactivated, thereby reducing communication traffic of the non-basic network and further reducing power consumption of the non-basic network for network energy saving purpose; meanwhile in the embodiment of the present invention, since the service channel of the non-basic network is not changed accordingly, the communication system, when the terminal needs to initiate a high-rate data service, can utilize the service channel of the non-basic network to bear the high-rate data service, thereby avoiding the problem of failure of service setup.

Furthermore, based on the above embodiments, as an aspect, a communication system is provided. In the communication system, a network in an overlapping coverage area of a multi-RAT network serves as a basic network, and other networks except the basic network serve as non-basic networks, the communication system comprising: a first access network node located on the basic network, a second access network node located on the non-basic network, and a terminal device, wherein,
the first access network node is configured to retain, in the overlapping coverage area of the multi-RAT network, a service channel and a common broadcast control channel of the current basic network, and notify the second access network node to deactivate all or part of the common broadcast control channels of the non-basic network; and
the first access network node is further configured to receive from the terminal device a service request sent via the basic network, and notify, when the current basic network is incapable of bearing the service request, the second access network node to allocate a service channel of the non-basic network for the terminal.

As a first possible instance of the communication system, in the communication system, the first access network node notifies the second access network node to deactivate all or part of the common broadcast control channels of the non-basic network, specifically, comprises:
the first access network node, according to a state of a terminal in connected mode in a cell, notifies the second access network node to deactivate all or part of the common broadcast control channels of the non-basic network.

As a second possible instance of the communication system, in the communication system, the first access network node notifies the second access network node to deactivate all or part of the common broadcast control channels of the non-basic network, specifically, comprises:
the first access network node, according to cell load information, determines all or part of the common broadcast control channels of the current non-basic network that needs to be deactivated, and constructs a deactivation indication for instructing the non-basic network to deactivate all or part of the common broadcast control channels; and the first access network node sends the deactivation indication to the second access network node, so as to instruct the non-basic network to deactivate all or part of the common broadcast control channels of the non-basic network.

As a third possible instance of the communication system, in the communication system, the second access network node is further configured to determine, according to cell load information, all or part of the common broadcast control channels of the current non-basic network that needs to be deactivated, and send information of deactivating all or part of the common broadcast control channels to the first access network node.

As a forth possible instance according to the first possible instance of the communication system, in the communication system, the second access network node is further configured to notify, via a dedicated signaling, the terminal device that is running services in the cell of a status of the cell deactivation; or
the first access network node is further configured to determine, according to the received information that is sent from the second access network node about deactivating all or part of the common broadcast control channels of the non-basic network, whether to notify the terminal device.

Based on descriptions of foregoing implementation manners, a person skilled in the art may clearly understand that the present invention may be implemented by using software plus a necessary hardware platform, or entirely by using hardware. Based on such understanding, the technical solutions in the present invention may be entirely or the part contributing to the prior art may be embodied in a form of a software product. The computer software product may be stored in a storage medium, such as a ROM/RAM, a magnetic disk, and a compact disk, and includes several instructions for instructing a computer device (which may be a personal computer, a server, a network device, or the like) to execute the method provided in each embodiment of the present invention or described in certain parts of the embodiments.

The foregoing descriptions are merely specific implementation manners of the present invention, but not intended to limit the protection scope of the present invention. Any variation or replacement made by a person skilled in the art within the technical scope of the present invention shall fall within the protection scope of the present invention. Therefore, the protection scope of the present invention shall be subject to the protection scope of the appended claims.

## Claims

1. A communication method for a multi-RAT network, wherein a network in an overlapping coverage area of the multi-RAT network serves as a basic network, the communication method comprising:
retaining (101, 302, 402), in the overlapping coverage area of the multi-RAT network, a service channel and a common broadcast control channel of the basic network;
receiving (102, 303, 405) a service request initiated by a terminal via the basic network; and
notifying (103; 304), when the basic network is incapable of bearing the service request, a non-basic network to allocate a service channel of the non-basic network for the terminal, wherein the non-basic network refers to other networks except the basic network in the overlapping coverage area of the multi-RAT network;
**characterized in that** the method further comprises:
notifying (101, 302, 402) the non-basic network to deactivate all or part of the common broadcast control channels of the non-basic network and meanwhile retain a service channel of the non-basic network; and
notifying, when cell load of the non-basic network is lower than a first preset threshold, the non-basic network to deactivate part of the service channels of the non-basic network, and at least one service channel of the non-basic network is retained for bearing a service request that the basic network fails to bear.

2. The communication method according to claim 1, before the receiving a service request initiated by a terminal via the basic network, further comprising:
notifying, via a dedicated signaling or a system message, the terminal of service bearing capability of a current serving area.

3. The communication method according to claim 2, wherein the service bearing capability of the serving area comprises: a service type supported by the serving area and/or a service bandwidth supported by the serving area.

4. The communication method according to claim 1, wherein the notifying a non-basic network to deactivate all or part of the common broadcast control channels of the non-basic network comprises:
notifying, according to a state of a terminal in connected mode in a cell, the non-basic network to deactivate all or part of the common broadcast control channels of the non-basic network.

5. The communication method according to claim 4, further comprising:
delivering, if the common broadcast control channels corresponding to the non-basic network are part deactivated, a broadcast system information block via an activated common broadcast control channel of the non-basic network at a preset scheduling time point; or
delivering, if the common broadcast control channels corresponding to the non-basic network are all deactivated, a broadcast system information block or a parameter comprised in the broadcast system information block via a dedicated signaling.

6. The communication method according to claim 1, wherein the notifying a non-basic network to deactivate all or part of the common broadcast control channels of the non-basic network comprises:
sending (S22) a cell deactivation indication to the non-basic network, so as to instruct the non-basic network to deactivate all or part of the common broadcast control channels of the non-basic network.

7. The communication method according to claim 1, wherein the notifying a non-basic network to deactivate all or part of the common broadcast control channels of the non-basic network comprises:
providing (S11, S21) cell load information of the current basic network for the non-basic network, so as to enable the non-basic network, according to the cell load information, to deactivate all or part of the common broadcast control channels of the non-basic network.

8. The communication method according to any one of claims 1 to 7, further comprising:
notifying, when cell load of the non-basic network is lower than a second preset threshold, the non-basic network to deactivate the cell.

9. A network device, wherein a network in an overlapping coverage area of a multi-RAT network serves as a basic network, the network device comprising:
an adjusting unit (21), configured to retain, in the overlapping coverage area of the multi-RAT network, a service channel and a common broadcast control channel of the basic network,;
a receiving unit (22), configured to receive a service request initiated by a terminal via the basic network; and
a first notifying unit (23), configured to notify, when the basic network is incapable of bearing the service request sent from the terminal, a non-basic network to allocate the service channel of the non-basic network for the terminal, wherein the non-basic network refers to other networks except the basic network in the overlapping coverage area of the multi-RAT network;
**characterized in that**
the adjusting unit (21) is further configured to notify the non-basic network to deactivate all or part of the common broadcast control channels of the non-basic network and meanwhile retain a service channel of the non-basic network; and
when cell load of the non-basic network is lower than a first preset threshold, notify the non-basic network to deactivate part of the service channels of the non-basic network, and at least one service channel of the non-basic network is retained for bearing a service request that the basic network fails to bear.

10. The network device according to claim 9, further comprising:
a second notifying unit (73), configured to notify, via a dedicated signaling or a system message, the terminal of service bearing capability of a current serving area.

11. The network device according to claim 9, wherein the adjusting unit (21) comprises:
a deactivating module (81), configured to notify, according to a state of a terminal in connected mode in a cell, the non-basic network to deactivate all or part of the common broadcast control channels of the non-basic network.

12. The network device according to claim 11, wherein the adjusting unit (21) further comprises a delivering module (82); and
the delivering module (82) is configured to deliver, if the common broadcast control channels corresponding to the non-basic network are part deactivated, a broadcast system information block via an activated common broadcast control channel of the non-basic network at a preset scheduling time point; or
the delivering module (82) is configured to deliver, if the common broadcast control channels corresponding to the non-basic network are all deactivated, a broadcast system information block or a parameter comprised in the broadcast system information block via a dedicated signaling.

13. The network device according to claim 9, wherein the adjusting unit (21) comprises:
an indicating module (91), configured to send a cell deactivation indication to the non-basic network, so as to instruct the non-basic network to deactivate all or part of the common broadcast control channels of the non-basic network.

14. The network device according to claim 9, wherein the adjusting unit (21) comprises:
a providing module (11), configured to provide cell load information of the current basic network for the non-basic network, so as to enable the non-basic network, according to the cell load information, to deactivate all or part of the common broadcast control channels of the non-basic network.

15. The network device according to any one of claims 9 to 14, wherein,
the adjusting unit (21) is further configured to notify, when cell load of the non-basic network is lower than a second preset threshold, the non-basic network to deactivate the cell .

## Patentansprüche

1. Kommunikationsverfahren für ein Multi-RAT-Netzwerk, wobei ein Netzwerk in einem überlappenden Abdeckungsbereich des Multi-RAT-Netzwerks als ein Basisnetzwerk dient und das Kommunikationsverfahren umfasst:
Beibehalten (101, 302, 402) eines Dienstkanals und eines gemeinsamen Broadcast-Steuerungskanals des Basisnetzwerks im überlappenden Abdeckungsbereich des Multi-RAT-Netzwerks;
Empfangen (102, 303, 405) einer durch ein Endgerät initiierten Dienstanfrage über das Basisnetzwerk; und
Benachrichtigen (103; 304), wenn das Basisnetzwerk nicht in der Lage ist, die Dienstanfrage zu tragen, eines Nicht-Basisnetzwerks zum Zuweisen eines Dienstkanals für das Nicht-Basisnetzwerk für das Endgerät, wobei sich das Nicht-Basisnetzwerk auf andere Netzwerke mit Ausnahme des Basisnetzwerks in dem überlappenden Abdeckungsbereich des Multi-RAT-Netzwerks bezieht;
**dadurch gekennzeichnet, dass** das Verfahren ferner umfasst:
Benachrichtigen (101, 302, 402) des Nicht-Basisnetzwerks zum Deaktivieren aller oder eines Teils der gemeinsamen Broadcast-Steuerungskanäle des Nicht-Basisnetzwerks unter Beibehalten eines Dienstkanals des Nicht-Basisnetzwerks; und
wenn die Zelllast des Nicht-Basisnetzwerks geringer ist als ein erster vorgegebener Schwellenwert: Benachrichtigen des Nicht-Basisnetzwerks zum Deaktivieren eines Teils der Dienstkanäle des Nicht-Basisnetzwerks, wobei zumindest ein Dienstkanal des Nicht-Basisnetzwerks zum Tragen einer Dienstanfrage, die das Basis-Netzwerk nicht tragen kann, beibehalten wird.

2. Kommunikationsverfahren nach Anspruch 1, vor dem Empfangen einer durch ein Endgerät über das Basisnetzwerk initiierten Dienstanfrage ferner umfassend:
Benachrichtigen des Endgeräts über die Fähigkeit zum Tragen eines Dienstes eines aktuell aktiven Bereichs über eine dedizierte Signalisierung oder eine Systemnachricht.

3. Kommunikationsverfahren nach Anspruch 2, wobei die Fähigkeit zum Tragen eines Dienstes des aktuell aktiven Bereichs umfasst: einen durch den aktiven Bereich unterstützten Diensttyp und/oder eine durch den aktiven Bereich unterstützte Dienstbandbreite.

4. Kommunikationsverfahren nach Anspruch 1, wobei das Benachrichtigen eines Nicht-Basisnetzwerks zum Deaktivieren aller oder eines Teils der gemeinsamen Broadcast-Steuerungskanäle des Nicht-Basisnetzwerks umfasst:
Benachrichtigen des Nicht-Basisnetzwerks entsprechend einem Status eines Endgeräts im Verbindungsmodus in einer Zelle zum Deaktivieren aller oder eines Teils der gemeinsamen Broadcast-Steuerungskanäle des Nicht-Basisnetzwerks.

5. Kommunikationsverfahren nach Anspruch 4, ferner umfassend:
Falls die gemeinsamen Broadcast-Steuerungskanäle, die dem Nicht-Basisnetzwerk entsprechen, teilweise deaktiviert sind, Zustellen eines Broadcast-Systeminformationsblocks über einen aktivierten gemeinsamen Broadcast-Steuerungskanal des Nicht-Basisnetzwerks zu einem vorgegebenen eingeplanten Zeitpunkt; oder
falls die gemeinsamen Broadcast-Steuerungskanäle, die dem Nicht-Basisnetzwerk entsprechen, alle deaktiviert sind, Zustellen eines Broadcast-Systeminformationsblocks oder eines in dem Broadcast-Systeminformationsblock umfassten Parameters über eine dedizierte Signalisierung.

6. Kommunikationsverfahren nach Anspruch 1, wobei das Benachrichtigen eines Nicht-Basisnetzwerks zum Deaktivieren aller oder eines Teils der gemeinsamen Broadcast-Steuerungskanäle des Nicht-Basisnetzwerks umfasst:
Senden (S22) einer Zell-Deaktivierungsangabe zu dem Nicht-Basisnetzwerk, um das Nicht-Basisnetzwerk anzuweisen, alle oder einen Teil der gemeinsamen Broadcast-Steuerungskanäle des Nicht-Basisnetzwerks zu deaktivieren.

7. Kommunikationsverfahren nach Anspruch 1, wobei das Benachrichtigen eines Nicht-Basisnetzwerks zum Deaktivieren aller oder eines Teils der gemeinsamen Broadcast-Steuerungskanäle des Nicht-Basisnetzwerks umfasst:
Bereitstellen (S11, S21) von Zell-Ladeinformation des aktuellen Basisnetzwerks für das Nicht-Basisnetzwerk, um es dem Nicht-Basisnetzwerk entsprechend der Zell-Ladeinformation zu ermöglichen, alle oder einen Teil der gemeinsamen Broadcast-Steuerungskanäle des Nicht-Basisnetzwerks zu deaktivieren.

8. Kommunikationsverfahren nach einem der Ansprüche 1 bis 7, ferner umfassend:
Wenn die Zelllast des Nicht-Basisnetzwerks geringer ist als ein zweiter vorgegebener Schwellenwert: Benachrichtigen des Nicht-Basisnetzwerks zum Deaktivieren der Zelle.

9. Netzwerkeinrichtung, wobei ein Netzwerk in einem überlappenden Abdeckungsbereich eines Multi-RAT-Netzwerks als ein Basisnetzwerk dient und die Netzwerkeinrichtung umfasst:
eine Einstelleinheit (21), ausgelegt zum Beibehalten eines Dienstkanals und eines gemeinsamen Broadcast-Steuerungskanals des Basisnetzwerks im überlappenden Abdeckungsbereich des Multi-RAT-Netzwerks;
eine Empfangseinheit (22), ausgelegt zum Empfangen einer durch ein Endgerät initiierten Dienstanfrage über das Basisnetzwerk; und
eine erste Benachrichtigungseinheit (23) ausgelegt zum Benachrichtigen, wenn das Basisnetzwerk nicht in der Lage ist, die vom Endgerät gesendete Dienstanfrage zu tragen, eines Nicht-Basisnetzwerks zum Zuweisen des Dienstkanals des Nicht-Basisnetzwerks für das Endgerät, wobei sich das Nicht-Basisnetzwerk auf andere Netzwerke mit Ausnahme des Basisnetzwerks in dem überlappenden Abdeckungsbereich des Multi-RAT-Netzwerks bezieht;
**dadurch gekennzeichnet, dass**
die Einstelleinheit (21) ferner ausgelegt ist zum Benachrichtigen des Nicht-Basisnetzwerks zum Deaktivieren aller oder eines Teils der gemeinsamen Broadcast-Steuerungskanäle des Nicht-Basisnetzwerks unter Beibehalten eines Dienstkanals des Nicht-Basisnetzwerks; und
wenn die Zelllast des Nicht-Basisnetzwerks geringer ist als ein erster vorgegebener Schwellenwert: Benachrichtigen des Nicht-Basisnetzwerks zum Deaktivieren eines Teils der Dienstkanäle des Nicht-Basisnetzwerks, wobei zumindest ein Dienstkanal des Nicht-Basisnetzwerks zum Tragen einer Dienstanfrage, die das Basis-Netzwerk nicht tragen kann, beibehalten wird.

10. Netzwerkeinrichtung nach Anspruch 9, ferner umfassend:
eine zweite Benachrichtigungseinheit (73), ausgelegt zum Benachrichtigen des Endgeräts über die Fähigkeit zum Tragen eines Dienstes eines aktuell aktiven Bereichs über eine dedizierte Signalisierung oder eine Systemnachricht.

11. Netzwerkeinrichtung nach Anspruch 9, wobei die Einstelleinheit (21) umfasst:
ein Deaktivierungsmodul (81), ausgelegt zum Benachrichtigen des Nicht-Basisnetzwerk entsprechend einem Status eines Endgeräts im Verbindungsmodus in einer Zelle zum Deaktivieren aller oder eines Teils der gemeinsamen Broadcast-Steuerungskanäle des Nicht-Basisnetzwerks.

12. Netzwerkeinrichtung nach Anspruch 11, wobei die Einstelleinheit (21) ferner ein Zustellmodul (82) umfasst; und
das Zustellmodul (82) ausgelegt ist zum Zustellen, falls die gemeinsamen Broadcast-Steuerungskanäle, die dem Nicht-Basisnetzwerk entsprechen, teilweise deaktiviert sind, eines Broadcast-Systeminformationsblocks über einen aktivierten gemeinsamen Broadcast-Steuerungskanal des Nicht-Basisnetzwerks zu einem vorgegebenen eingeplanten Zeitpunkt; oder
das Zustellmodul (82) ausgelegt ist zum Zustellen, falls die gemeinsamen Broadcast-Steuerungskanäle, die dem Nicht-Basisnetzwerk entsprechen, alle deaktiviert sind, eines Broadcast-Systeminformationsblocks oder eines in dem Broadcast-Systeminformationsblock umfassten Parameters über eine dedizierte Signalisierung.

13. Netzwerkeinrichtung nach Anspruch 9, wobei die Einstelleinheit (21) umfasst:
ein Angabemodul (91), ausgelegt zum Senden einer Zell-Deaktivierungsangabe des Nicht-Basisnetzwerks, um das Nicht-Basisnetzwerk anzuweisen, alle oder einen Teil der gemeinsamen Broadcast-Steuerungskanäle des Nicht-Basisnetzwerks zu deaktivieren.

14. Netzwerkeinrichtung nach Anspruch 9, wobei die Einstelleinheit (21) umfasst:
ein Bereitstellungsmodul (11), ausgelegt zum Bereitstellen von Zell-Ladeinformation des aktuellen Basisnetzwerks für das Nicht-Basisnetzwerk, um es dem Nicht-Basisnetzwerk entsprechend der Zell-Ladeinformation zu ermöglichen, alle oder
einen Teil der gemeinsamen Broadcast-Steuerungskanäle des Nicht-Basisnetzwerks zu deaktivieren.

15. Netzwerkeinrichtung nach einem der Ansprüche 9 bis 14, wobei die Einstelleinheit (21) ferner ausgelegt ist, wenn die Zelllast des Nicht-Basisnetzwerks geringer ist als ein zweiter vorgegebener Schwellenwert, zum Benachrichtigen des Nicht-Basisnetzwerks zum Deaktivieren der Zelle.

## Revendications

1. Procédé de communication pour un réseau multiRAT, dans lequel un réseau dans une zone de couverture en chevauchement du réseau multiRAT sert de réseau de base, le procédé de communication comprenant de :
conserver (101, 302, 402), dans la zone de couverture en chevauchement du réseau multiRAT, un canal de service et un canal de commande de diffusion commun du réseau de base ;
recevoir (102, 303, 405) une demande de service initiée par un terminal via le réseau de base ; et
notifier (103 ; 304), lorsque le réseau de base est incapable de prendre en charge la demande de service, à un réseau non de base d'allouer un canal de service du réseau non de base au terminal, dans lequel le réseau non de base désigne d'autres réseaux que le réseau de base dans la zone de couverture en chevauchement du réseau multiRAT ;
**caractérisé en ce que** le procédé comprend en outre de :
notifier (101, 302, 402) au réseau non de base de désactiver tout ou partie des canaux de commande de diffusion communs du réseau non de base et pendant ce temps de conserver un canal de service du réseau non de base ; et
notifier, lorsque la charge de cellule du réseau non de base est inférieure à un premier seuil prédéfini, au réseau non de base de désactiver une partie des canaux de service du réseau non de base, et au moins un canal de service du réseau non de base est conservé pour prendre en charge une demande de service que le réseau de base n'est pas en mesure de prendre en charge.

2. Procédé de communication selon la revendication 1, avant la réception d'une demande de service initiée par un terminal via le réseau de base, comprenant en outre de :
notifier, via une signalisation dédiée ou un message système, au terminal la capacité de prise en charge de service d'une zone de desserte actuelle.

3. Procédé de communication selon la revendication 2, dans lequel la capacité de prise en charge de service de la zone de desserte comprend : un type de service supporté par la zone de desserte et/ou une largeur de bande de service supportée par la zone de desserte.

4. Procédé de communication selon la revendication 1, dans lequel la notification à un réseau non de base de désactiver tout ou partie des canaux de commande de diffusion communs du réseau non de base comprend de :
notifier, en fonction d'un état d'un terminal en mode connecté dans une cellule, au réseau non de base de désactiver tout ou partie des canaux de commande de diffusion communs du réseau non de base.

5. Procédé de communication selon la revendication 4, comprenant en outre de :
délivrer, si les canaux de commande de diffusion communs correspondant au réseau non de base sont partiellement désactivés, un bloc d'informations de système de diffusion via un canal de commande de diffusion commun activé du réseau non de base à un instant de programmation prédéfini ; ou
délivrer, si les canaux de commande de diffusion communs correspondant au réseau non de base sont tous désactivés, un bloc d'informations de système de diffusion ou un paramètre compris dans le bloc d'informations de système de diffusion via une signalisation dédiée.

6. Procédé de communication selon la revendication 1, dans lequel la notification à un réseau non de base de désactiver tout ou partie des canaux de commande de diffusion communs du réseau non de base comprend de :
envoyer (S22) une indication de désactivation de cellule au réseau non de base, de manière à donner l'instruction au réseau non de base de désactiver tout ou partie des canaux de commande de diffusion communs du réseau non de base.

7. Procédé de communication selon la revendication 1, dans lequel la notification à un réseau non de base de désactiver tout ou partie des canaux de commande de diffusion communs du réseau non de base comprend de :
fournir (S11, S21) des informations sur la charge de cellule du réseau de base actuel au réseau non de base, de manière à permettre au réseau non de base, en fonction des informations de charge de cellule, de désactiver tout ou partie des canaux de commande de diffusion communs du réseau non de base.

8. Procédé de communication selon l'une quelconque des revendications 1 à 7, comprenant en outre de :
notifier, lorsque la charge de cellule du réseau non de base est inférieure à un second seuil prédéfini, au réseau non de base de désactiver la cellule.

9. Dispositif de réseau, dans lequel un réseau dans une zone de couverture en chevauchement d'un réseau multiRAT sert de réseau de base, le dispositif de réseau comprenant :
une unité de réglage (21), configurée pour conserver, dans la zone de couverture en chevauchement du réseau multiRAT, un canal de service et un canal de commande de diffusion commun du réseau de base ;
une unité de réception (22), configurée pour recevoir une demande de service initiée par un terminal via le réseau de base ; et
une première unité de notification (23), configurée pour notifier, lorsque le réseau de base est incapable de prendre en charge la demande de service envoyée par le terminal, à un réseau non de base d'allouer le canal de service du réseau non de base au terminal, dans lequel le réseau non de base désigne d'autres réseaux que le réseau de base dans la zone de couverture en chevauchement du réseau multiRAT ;
**caractérisé en ce que**
l'unité de réglage (21) est en outre configurée pour notifier au réseau non de base de désactiver tout ou partie des canaux de commande de diffusion communs du réseau non de base et pendant ce temps de conserver un canal de service du réseau non de base ; et
lorsque la charge de cellule du réseau non de base est inférieure à un premier seuil prédéfini, notifier au réseau non de base de désactiver une partie des canaux de service du réseau non de base, et au moins un canal de service du réseau non de base est conservé pour prendre en charge une demande de service que le réseau de base n'est pas en mesure de prendre en charge.

10. Dispositif de réseau selon la revendication 9, comprenant en outre :
une seconde unité de notification (73), configurée pour notifier, via une signalisation dédiée ou un message système, au terminal la capacité de prise en charge de service d'une zone de desserte actuelle.

11. Dispositif de réseau selon la revendication 9, dans lequel l'unité de réglage (21) comprend :
un module de désactivation (81), configuré pour notifier, en fonction de l'état d'un terminal en mode connecté dans une cellule, au réseau non de base de désactiver tout ou partie des canaux de commande de diffusion communs du réseau non de base.

12. Dispositif de réseau selon la revendication 11, dans lequel l'unité de réglage (21) comprend en outre un module de distribution (82) ; et
le module de distribution (82) est configuré pour délivrer, si les canaux de commande de diffusion communs correspondant au réseau non de base sont partiellement désactivés, un bloc d'informations de système de diffusion via un canal de commande de diffusion commun activé du réseau non de base à un instant de programmation prédéfini ; ou
le module de distribution (82) est configuré pour délivrer, si les canaux de commande de diffusion communs correspondant au réseau non de base sont tous désactivés, un bloc d'informations de système de diffusion ou un paramètre compris dans le bloc d'informations de système de diffusion via une signalisation dédiée.

13. Dispositif de réseau selon la revendication 9, dans lequel l'unité de réglage (21) comprend :
un module indicateur (91), configuré pour envoyer une indication de désactivation de cellule au réseau non de base, de manière à donner l'instruction au réseau non de base de désactiver tout ou partie des canaux de commande de diffusion communs du réseau non de base.

14. Dispositif de réseau selon la revendication 9, dans lequel l'unité de réglage (21) comprend :
un module de fourniture (11), configuré pour fournir des informations de charge de cellule du réseau de base actuel au réseau non de base, de manière à permettre au réseau non de base, en fonction des informations de charge de cellule, de désactiver tout ou partie des canaux de commande de diffusion communs du réseau non de base.

15. Dispositif de réseau selon l'une quelconque des revendications 9 à 14, dans lequel l'unité de réglage (21) est en outre configurée pour notifier, lorsque la charge de cellule du réseau non de base est inférieure à un second seuil prédéfini, au réseau non de base de désactiver la cellule.
